# EUROPEAN PATENT APPLICATION

(11) **EP 2 088 738 A1**
(43) Date of publication of application: **12.08.2009**
(21) Application number: 08151131.3
(22) Date of filing: 06.02.2008
(51) Int. Cl.: H04L 29/06

(54) **End-to-end encrypted communication over mobile network**

(71) Applicant: Sectra Communications AB, 583 30 Linköping (SE)
(72) Inventor: Hansson, Anders, 586 66 Linköping (SE); Callmer, Jonas, 181 44 Lidingö (SE); Wiklander, Jonas, 582 37 Linköping (SE)
(74) Representative: Bokinge, Ole

(57) **Abstract**

Transceivers (31 a; 71) for transmitting and/or receiving cipher data to/from other tranceivers (31 b, 51; 31) in end-to-end encrypted communication over a mobile network, and methods for transmitting and receiving in such communication. The mobile network (7) is of a type supporting real-time multimedia communication, such as video telephony, with transparency of multimedia data being communicated. Preferably the mobile network is a cellular UMTS network. Cipher data is being sent/received through a circuit switched multimedia bearer service of the mobile network (7), the bearer service being reserved in the mobile network (7) for multimedia communication. Preferably the multimedia bearer service is UMTS service BS30 transparent for Multimedia.

## Description

### Field of the invention

The present invention relates generally to end-to-end encrypted communication over a mobile network, preferably a UMTS network. More specifically it relates to a transceiver, such as a mobile telephone or gateway, adapted to transmit and/or receive cipher data in such communication, and methods for transmitting and receiving the cipher data.

### Background

Presently, end-to-end encrypted voice communication over publicly available mobile networks takes place over GSM or CDMA mobile networks using circuit switched data (CSD) bearer services. For GSM a transparent or non-transparent asynchronous CSD bearer service at 9600 bps is typically selected for secure voice communication. GSM provides CSD bearer services at bit rates up to 14400 bps and the selected bit rate depends on the voice codec and the crypto protocol overhead. Calls between GSM and PSTN uses modem standards like ITU-T V.32 or V.34. Calls between GSM and GSM or between GSM and ISDN typically use ITU-T V.110.

For inter-working between GSM and IP networks, a technology called modem relay (ITU-T V.150 recommendation) provides the ability to terminate modem signaling. A PSTN to IP media gateway terminates modem signaling for bandwidth efficient transportation as data over IP networks. By using this type of media gateway, GSM, PSTN and IP networks are connected together, to enable end-to-end encrypted communications. However, for newer and improved mobile networks, such as GPRS, EDGE and UMTS, data services that are packet based have become predominant. As a consequence, CSD over GSM attract and is being used by fewer and fewer applications (and users). Low demand and utilization in turn means that system providers and network operators of economical reasons become reluctant to prioritize, or even support, these services. Hence, as a side effect, present end-to-end encrypted voice communication may start to suffer from problems with service availability, stability and roaming between operators and between countries. Encrypted voice communication is a real time data application which is dependent on good quality of service being provided by the network, or networks, in use.

### Summary of the invention

In view of the above, an object of this disclosure is to present a solution overcoming or at least alleviating problems in the prior art. A more specific object is to present an alternative to existing end-to-end encrypted voice communication solutions over mobile public networks, which alternative stand better chance not to suffer from quality of service related problems.

During efforts to come up with a solution, the applicant found out that, despite the comparatively high bandwidth offered by dedicated data services in the present "next generation" alternatives to GSM, such as UMTS, a sufficiently high quality of service could in practice often not be accomplished for end-to-end encrypted voice communication. One explanation to this may be that the available data services are packet switched with priorities, bandwidth allocation and bandwidth utilization which vary between different system providers and network operators, and also over time. As a result the risk is vast for a bottleneck in the path of communication, either permanent or temporal. In particular UMTS was investigated since that is a global, well spread network standard and known as the third generation (3G) and successor of GSM. The applicant found out, and has verified, that circuit switched bearer service in UMTS that are reserved for multimedia communication, such as video telephony, and that hitherto exclusively have been utilized for such communication, in fact also can be advantageously used for end-to-end encrypted communication fulfilling real time-requirements and with sufficient quality of service. This is promising since, in principle, all modern, and likely also future, mobile communications standards prioritize providing services for real-time communication of multimedia, i.e. real-time communication of more than one media simultaneously, such in the case of video telephony which today is the driving force, and also assign higher bandwidths for these services than conventional services for real-time communication of plain voice. The prioritizing and the higher bandwidth is very beneficial for the outlook of being able to provide high quality end-to-end encrypted voice communication, and even end-to-end encrypted video telephony, today and in the future.

The invention is defined by the appended independent claims. Preferred embodiments are set forth in the dependent claims and in the following description and drawings.

Hence, according to a first aspect, there is provided a transceiver for transmitting cipher data in end-to-end encrypted communication with another transceiver over a mobile network, said transceiver being adapted for use in said mobile network, said mobile network supporting real-time multimedia communication, such as video telephony, with transparency of multimedia data being communicated, said transceiver comprising means for establishing a connection link over the mobile network for end-to-end encrypted communication with said another transceiver; and means for sending cipher data to said another transceiver through a circuit switched multimedia bearer service of said mobile network, said bearer service being reserved in said mobile network for said multimedia communication.

The transceiver may be an end-user controlled device, such as a mobile telephone, further comprising means for forming cipher data by encrypting plain data, preferably in real time, such as means for encrypting user voice data in real-time.

Alternatively the transceiver may be a gateway, preferably additionally adapted for use in an Internet Protocol network, and further comprising means for receiving cipher data from the IP network in an IP network media transport protocol format. The cipher data may be originating from a third transceiver being an end-user controlled device, such as a personal computer, connected to said IP network. The transceiver may further comprise means for performing transport protocol conversion of the received cipher data in the IP network media transport protocol format to cipher data in a format compatible with said circuit switched multimedia bearer service of the mobile network, said conversion being transparent for said cipher data.

According to a second aspect there is provided a transceiver for receiving cipher data in end-to-end encrypted communication with another transceiver over a mobile network, said transceiver being adapted for use in said mobile network, said mobile network supporting real-time multimedia communication, such as video telephony, with transparency of multimedia data being communicated, said transceiver comprising: means for establishing a connection link over the mobile network for end-to-end encrypted communication with said another transceiver, and means for receiving cipher data from said another transceiver through a circuit switched multimedia bearer service of said mobile network, said bearer service being reserved in said mobile network for said multimedia communication.

The transceiver may be an end-user controlled device, such as a mobile telephone, further comprising means for forming plain data by decrypting, preferably in real-time, the cipher data, such as means for decrypting encrypted user voice data in real-time.

Alternatively the transceiver may be a gateway, preferably additionally adapted for use in an Internet Protocol network, and further comprising: means for sending cipher data to the IP network using an IP network media transport protocol. The cipher data may be addressed to a third transceiver, said third transceiver being an end-user controlled device, such as a personal computer, connected to said IP network. The transceiver further preferably comprises means for performing transport protocol conversion of the received cipher data in format resulting from said circuit switched multimedia bearer service of the mobile network to the IP network media transport protocol format, said conversion being transparent for said cipher data.

According to a third aspect there is provided a method for transmitting cipher data in end-to-end encrypted communication between a first transceiver and a second transceiver over a mobile network, at least said first transceiver being adapted for use in said mobile network, said mobile network supporting real-time multimedia communication, such as video telephony, with transparency of multimedia data being communicated, the method comprising the following steps being performed in the first transceiver: establishing a connection link over the mobile network for end-to-end encrypted communication with the second transceiver, sending cipher data to the second transceiver through a circuit switched multimedia bearer service of said mobile network, said bearer service being reserved in said mobile network for said multimedia communication.

According to a fourth aspect there is provided a method for receiving cipher data in end-to-end encrypted communication between a first transceiver and a second transceiver over a mobile network, at least said first transceiver being adapted for use in said mobile network, said mobile network supporting real-time multimedia communication, such as video telephony, with transparency of multimedia data being communicated, the method comprising the following steps being performed in the first transceiver: establishing a connection link over the mobile network for end-to-end encrypted communication with the second transceiver, receiving cipher data from the second transceiver through a circuit switched multimedia bearer service of said mobile network, said bearer service being reserved in said mobile network for said multimedia communication.

It should be understood that the steps which the transceivers according to the first and second aspect are adapted to perform, are steps which are applicable as method steps according to the third and fourth aspect respectively, and also that other features pertaining to the transceiver aspects are applicable to the method aspect.

According to a fifth aspect there is provided a computer program product, comprising program code to execute steps according to any one or both method aspects, the program product being loadable into an internal memory of the first transceiver.

According to a sixth aspect there is provided use of a circuit switched multimedia bearer service in a mobile network for end-to-end encrypted communication over said network.

### For all of the above aspects:

The mobile network is preferably a cellular Universal Mobile Telecommunications Service (UMTS) network. As known to the skilled person, a UMTS network if often referred to as the third generation cell phone network technology, and has been specified by 3GPP, 3rd Generation Partnership Project. The circuit switched multimedia bearer service is preferably transparent for multimedia data, such as BS30 transparent for Multimedia as supported by UMTS. As known to the skilled person, BS30 is defined in the UMTS standard, in particular in specification TS 22.002 specified by the 3rd Generation Partnership Project (3GPP). One specific advantage in the case of the UMTS multimedia bearer service BS30 transparent for Multimedia is that it supports up to 64kbps bandwidth, which e.g. even may enable end-to-end encrypted video telephony, which today is not available for end-to-end communication over public mobile networks, such as GSM.

The IP network media transport protocol is preferably a protocol designed for real time data transport, such as the Realtime Transport Protocol (RTP), or the Secure Realtime Transport Protocol (SRTP). RTP and SRTP are, as such, well known IP-protocols and are defined in IETF RFC 3550 and 3711 respectively.

From the above it should be understood that the presented solution has the advantage of being applicable in both e.g. mobile phones in contact with only one type of mobile network, and in gateways in contact with a mobile network and an IP network, and that that the solution thereby enables end-to-end encrypted communication within and between these networks.

### Brief description of the drawings

The above, as well as other aspects, objects, features and advantages of the present invention, will be better understood through the following illustrative and non-limiting detailed description, with reference to the appended schematic drawings.
Fig. 1a shows an example of connection links for end-to-end encrypted communication in a mobile network and between the mobile network and an IP network.
Fig. 1b shows an exemplifying block diagram of a secure mobile equipment as shown in Fig. 1a.
Fig. 1c shows a exemplifying block diagram of a secure IP endpoint as shown in Fig. 1a.
Fig. 1d shows an exemplifying block diagram of a data transparent gateway as shown in Fig. 1a.
Fig. 1e shows in an exemplifying block diagram different protocol layers and conversions that may be involved for end-to-end encrypted communication between the mobile network and the IP network.
Fig. 2a is a flow chart that shows steps in a method for sending cipher data from a secure mobile equipment in the mobile network.
Fig. 2b is a flow chart that shows steps in a method for receiving, in a secure mobile equipment in the mobile network, cipher data from another secure mobile equipment.
Fig. 3a is a flow chart that shows steps in a method for transmitting cipher data from the IP network to the mobile network.
Fig. 3b is a flow chart that shows steps in a method for transmitting cipher data from the mobile network to the IP network.

In the drawings the same reference numerals may be used for similar or corresponding elements, even when these are elements in different examples or embodiments.

### Description of referred embodiments

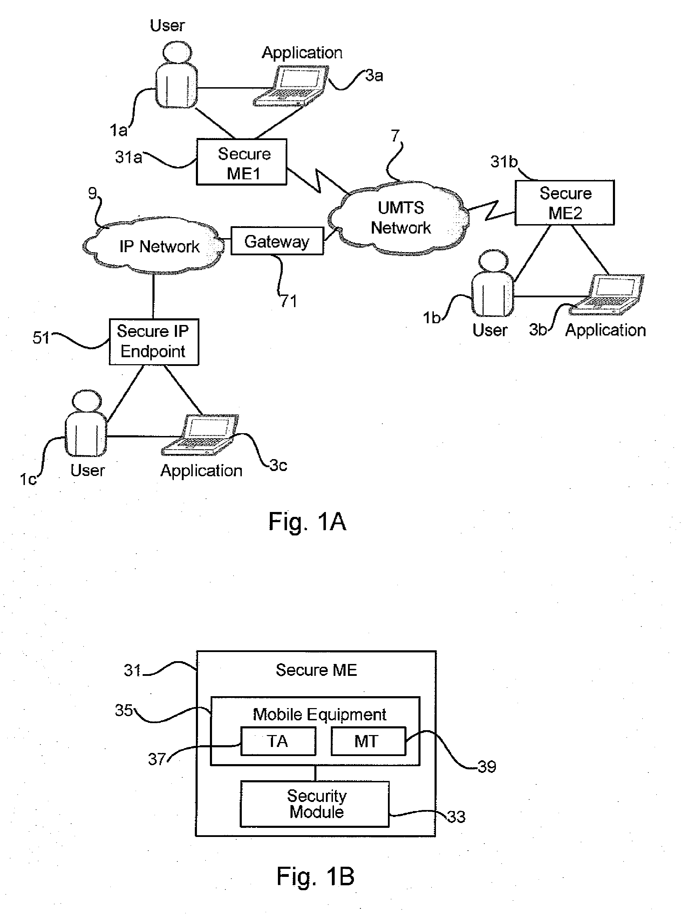

Fig. 1a shows an example of connection links for end-to-end encrypted communication in a UMTS network 7 and between the UMTS network 7 and an IP network 9. In the example, users 1a-c interacts either direct, or via applications 3a-c, with secure Mobile Equipments (secure MEs) 31a-b that are connected to the UMTS network 7, or with a secure IP endpoint 51 connected to the IP Network 9. The UMTS network 7 and IP network 9 are connected by a gateway 71 arranged to allow end-to-end encrypted communication between these networks 7, 9.

Fig. 1b shows an exemplifying block diagram of one of the secure MEs 31a-b in Fig. 1a. The shown secure ME 31 here comprises and is arranged to use a security module 33 and a Mobile Equipment (ME) 35 to provide end-to-end encrypted communication over the UMTS network 7. The ME may e.g. be an embedded GSM/UMTS module or a separate mobile phone. The ME 35 and the security module 33 may e.g. be integrated in one physical unit, such a mobile telephone, or may be in separate physical units, such as a security device and mobile telephone arranged for interconnection. The security module typically consists of, or comprises, dedicated hardware to be able to provide strong encryption and decryption in real time. A hardware solution also increase security compared to e.g. a pure software solution, since a hardware solution in general is easier to keep confidential and can be kept more isolated and separate from other more public parts of the secure ME. Furthermore, the ME 35 typically comprises a Mobile Terminal (MT) 39 and a Terminal Adapter (TA) 37, where the MT 39 provides connectivity to the UMTS mobile network 7 and the TA 37 provides access to network bearer services, typically via AT-commands. AT-commands are generally used to control mobile terminal functions and services provided by GSM and UMTS mobile networks via the ME 35. (For more information about AT-commands and the command syntax, responses and result codes, see AT Command set for UE", 3GPP TS 27.007.) The security module 33 typically provides encryption and decryption functions for user data, such as user voice data, in real-time, and also protocols for establishing an encrypted connection link for encrypted communication, e.g. between individual secure MEs 31a-b, or between one of the secure MEs 31a-b and the secure IP endpoint 51.

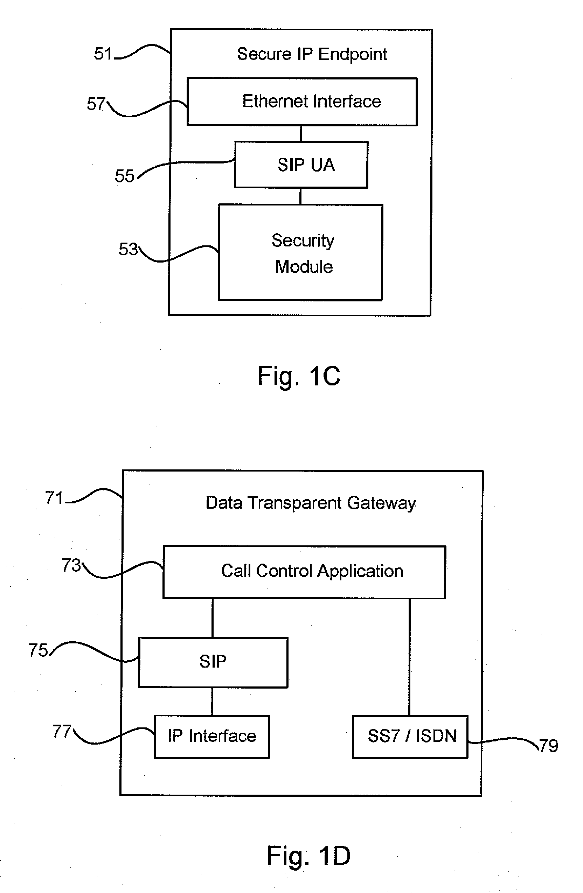

Fig. 1c shows an exemplifying block diagram of the secure IP endpoint 51 in Fig. 1a. The shown secure IP endpoint 51 comprises an Ethernet interface 57, arranged to provide physical interface to the IP network 9, and a Session Initiation Protocol User Agent (SIP UA) 55, arranged to provide connectivity with other secure IP endpoints 51, and via the gateway 71 to secure MEs 31 connected to UMTS networks 7 and/or ISDN. The shown secure IP endpoint 51 further comprises a security module 53, which has similar function as the security module 71 of the secure ME 31, although arranged with different input/output interfaces. End-to-end encrypted communication using the security module 53 may take part between individual secure IP endpoints 51, or between a secure IP endpoint 51 and a secure ME 31.

Fig. 1d shows an exemplifying block diagram of the data transparent gateway 71 as shown in Fig. 1a. The gateway 71 is arranged to connect the UMTS network 7 and the IP network 9 to enable encrypted end-to-end communication between these networks. The gateway 71 is transparent to data being sent between any secure ME 31 connected to the UMTS network 7 and the secure IP endpoint 51 connected to the IP network 9. There should hence be no transcoding in the gateway 71, at least not for for end-to-end encrypted communication. The shown gateway 71 comprises an SS7/ISDN interface 79, arranged to connect the gateway 71 to e.g. the UMTS network 7, or an ISDN, via SS7 ISUP (Signaling System 7 ISDN User Part), or ISDN BRI/PRI (Basic Rate Interface / Primary Rate Interface). The SS7 / ISDN interface 79 is here arranged connected to a call control application 73 which is arranged to connect IP and mobile sides of the gateway. The shown gateway 71 further comprises an IP Interface 77, arranged to connect the gateway 71 to the IP network 9, and a SIP block 75, arranged to connect the call control application 73 and the IP interface 77. The IP interface 77 is typically arranged to use the SIP protocol for call setup on the IP network side.

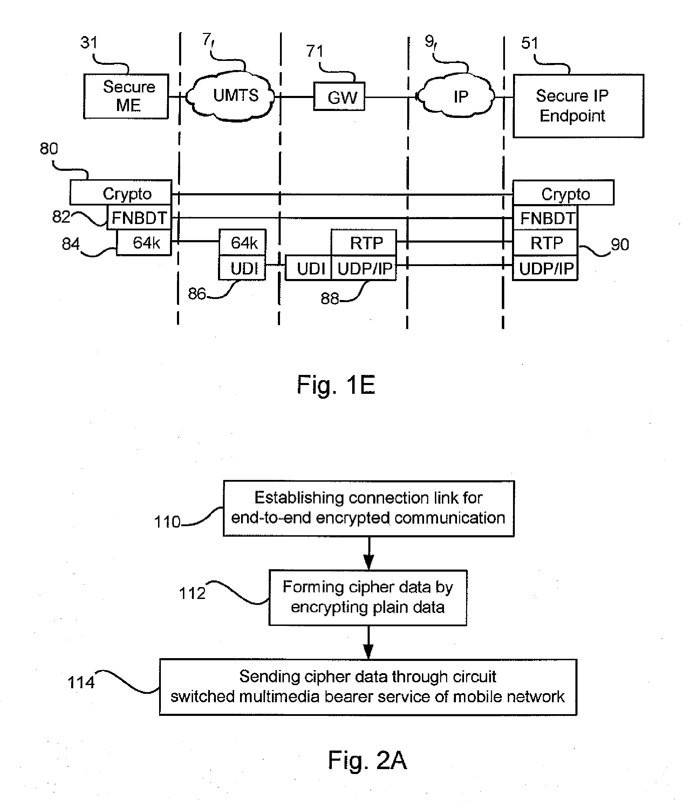

Fig. 1e shows an exemplifying block diagram over different protocol layers and conversions that may be involved for end-to-end encrypted communication between the UMTS network 7 and the IP network 9. On top is an application layer (not shown) that may carry audio, video or any data for the end-to-end encrypted communication. A crypto layer 80 takes care of encryption/decryption of application data. In the shown example a FNBDT (Future Narrow Band Digital Terminal) protocol layer 82 takes care of communication of encrypted data to/from the crypto layer 80. One example of an alternative to the FNBDT layer 82 is a SCIP (Secure Communications Interoperability Protocol). A 64k layer 84 is in this example used for communication to/from the secure ME 31 and the UMTS network 7. The 64k layer here refers to a UMTS network circuit switched multimedia bearer service. In the shown example an UDI (Unrestricted Digital Information) layer 86 is arranged to operate with an UDP/IP (User Datagram Protocol / Internet Protocol) layer so that cipher data can be exchanged between the networks 7,9. The gateway 71 may be arranged to convert between the protocol of the UDI layer 86 on the UMTS side, and the protocol of the UDP/IP layer 88 on the IP side. In the shown example the UDP/IP layer 88 is arranged to operate with an RTP layer 90. The gateway 71 is here adapted to communicate over the IP network 9 with the secure IP endpoint 51 using the UDP/IP layer 80 and RTP layer 90.

Fig. 2a is a flow chart that shows steps in a method for sending cipher data from the first secure ME 31a in the mobile network 7. In a first step 110, a connection link for end-to-end encrypted communication is established. Initiator for establishing the connection link, i.e. the caller, may be the first secure ME 31a or the other part of the communication, i.e. typically the second secure ME 31b, or the secure IP endpoint 51. In the latter case, the gateway 71 is typically involved in forwarding the call to the mobile network 7.

In one example, when the first secure ME 31a is making a call to the second secure ME 31b, the ME 35 of the first secure ME 31a is put in data mode by the AT+FCLASS=0 command, and then a bearer service is set by e.g. *AT*+*CBST=934,1,0.* Generally the selection of bearer service type for CS data calls is defined by the connection speed, the name and the connection element (+CBST <speed>,<name>,<ce>). For more information about UMTS bearer service types, AT-commands and the command syntax, responses and result codes, see e.g. "Circuit Bearer Services (BS) supported by a Public Land Mobile Network (PLMN)", TS22.002 and "AT Command set for UE", 3GPP TS 27.007. For UMTS mobile networks, the bearer service to select should be a circuit switched multimedia bearer service, such as BS30 transparent for Multimedia, which can be selected by setting the <speed>-parameter to an integer in the interval 130-134, corresponding to speeds between 28.8 kbs and 64 kbps. When the service has been set, the actual call is typically placed by e.g. using the *A TD>Phone number>* command. The incoming data call is typically answered by the *ATA* command in the second secure ME 31b. The answered call then typically results in *CONNECT 64000* (in case of selected speed 64 kbps) in the first secure ME 31 as confirmation that a communication link has been established.

It should be noted that the ME 35 should typically support access to the multimedia bearer service via AT-command interface to make it possible to setup the desired type of call. For example, if the ME 35 of the secure ME 31 is based on a conventional ME 35, such as a mobile phone which uses the multimedia bearer service for video telephony applications (typically implementing the H.324M protocol), this does not automatically means that the bearer service is accessible via AT-command interface in the ME 35. In connection with the first step 120, also encryption/decryption key and capability negotiation take places, which typically involves the security modules 33, 35 of the involved units. Details on selection and use of encryption methods and protocols for encrypted communication over the established connection link has been omitted since the established connecting link is transparent to any encryption protocol and is not direct dependent on what exact type of encryption that is being used.

Still referring to Fig. 2a, in a second step 112, after the connection link has been established, the first secure ME 31a is encrypting plain data, such as user voice data; or video, typically in real time, into cipher data by using the security module 33. In a third step 114, the cipher data is being sent over the mobile network 7 by the first secure ME 31a using the established connection link and the selected circuit switched multimedia bearer service. In the example above, the bearer service was set in connection with making the call. However, in other embodiments, e.g. involving other mobile networks than UMTS, the call and/or negotiation of keys etc may instead be performed independent on, or outside, the multimedia bearer service, which service in such situation may be involved in only the actual communication of the cipher data.

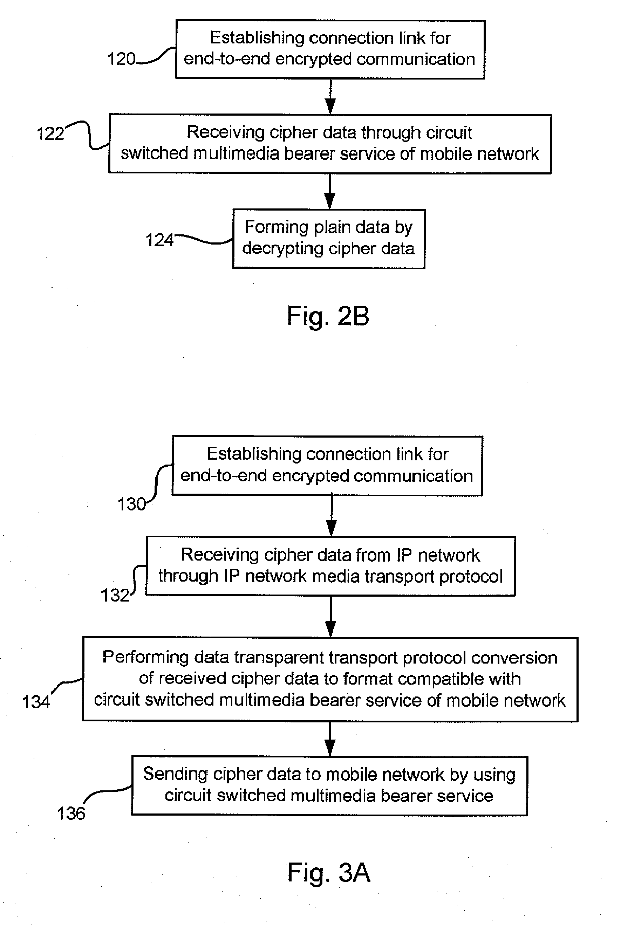

Fig. 2b is a flow chart that shows steps in a method for receiving cipher data in the first secure ME 31a. A first step 120 according to this embodiment corresponds to the first step 110, as was described above in connection with Fig. 2a. In a second step 122, cipher data is received through the circuit switched multimedia bearer service, which service also may be the same as described above. The received cipher data may be originating from the second secure ME 31b, or from the secure IP endpoint 51. In the latter case, the gateway 71 is responsible for routing and forwarding the data to the first secure ME 31a. In a third step 124, the received cipher data is being decrypted into plain data, e.g. voice data, by using the security module 33, which plain data then is output to the user 1a and/or application 3a.

Although sending and receiving cipher data has been described in two different embodiments, it should be understood that this in practice typically is being performed in duplex in the secure ME 31. For example, if the user 1a is using the secure ME 3a, e.g. in the form of a mobile telephone for secure voice conversation, the user 1a typically experiences the conversation no differently than from an ordinary mobile phone conversation. However, it is also possible to have secure MEs 31 that are enabled, or operated, to either only send or only receive cipher data.

Fig. 3a is a flow chart that shows steps in a method for transmitting cipher data from the IP network 9 to the UMTS network 7. This method is typically being performed in the gateway 71. In a first step 130, a connection link is established. One difference to corresponding step in the previously described methods, is that the gateway 71, as such, is typically not the initiator for establishing the connection link, this since the gateway 71 typically does not initiate a call, but may place the call in the mobile network on behalf of the secure IP endpoint 51, or in the IP network 9 on behalf of one of the secure MEs 31a-b. Another difference from the corresponding steps in the previously described embodiments is that the connection link here comprises two sub-connection links, one in the mobile network 7 and one in the IP network 9.

In one example, a call from one of the secure MEs 31a-to the secure IP endpoint 51 is routed via the gateway 71; the call from the secure ME 39 is made to the gateway 71, which then redirects the call to the IP endpoint 71. When the gateway 71 has set up a connection link to the secure IP endpoint 51, it answers the call to the secure ME 31. Besides this, the sub-connection link on the UMTS network 7 side may be established in substantially the same manner as was described in connection with the previous methods. To allow for a satisfying quality of service, also when a secure IP endpoint is involved, the sub-connection link in the IP network 9 is preferably set up to utilize a real-time transport protocol, such as the Realtime Transport Protocol (RTP), or the Secure Realtime Transport Protocol (SRTP).

Also here, of course, the step of establishing the connection link involves encryption/decryption key and capability negotiation before the connection link is ready for end-to-end encrypted communication. The gateway 71 is more or less only a messenger that forwards information after conversion into formats that are operable with the respective network. In a second step 132, cipher data is being received from the IP network over the established sub-connection link on the IP network side. Typically the cipher data is originating from the secure IP endpoint 51.

Still referring to Fig. 3a, in a third step 134, the gateway 71 is performing transparent conversion from the protocol and format that were used when the received cipher data was transported over the IP network 9, into a protocol and format that is compatible with the UMTS network 7, in particular with the circuit switched multimedia bearer service. By transparent conversion is meant that the cipher data, as such, is not changed by the conversion, since that would result in that the encrypted information content of the cipher data would be destroyed or that the encryption/decryption, as such, would become dependent on and had to involve the gateway 71. In a fourth step 136, the cipher data is being sent to the mobile network over the established sub-connection link on the mobile network 7 side, typically to be received by one of the secure MEs 31a-b.

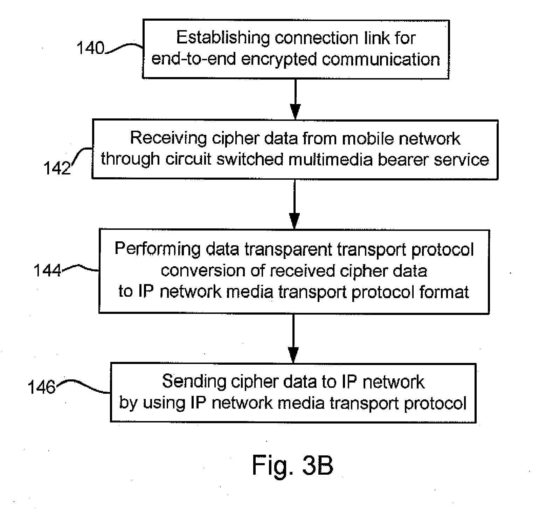

Fig. 3b is a flow chart that shows steps in a method for transmitting cipher data from the mobile network to the IP network. This method is typically also being performed in the gateway 71. A first step 140 for establishing a connection link for end-to-end communication, is substantially the same as the first step 130 as described above in connection with Fig. 3a. In a second step 142, cipher data is being received from the UMTS network 7 over the established sub-connection link on the mobile network side. The cipher data is typically originating from one of the secure MEs 31a-b. In a third step 144, the gateway 71 performs transparent conversion from the protocol and format that were used when the received cipher data was transported over the mobile network 7, i.e from the format used by the circuit switched multimedia bearer service, into a protocol and format that is compatible with the IP network 9. This is substantially the same type of conversion as in the third step 134 described above in connection with Fig. 3a, with the difference that it is being performed in the opposite direction. In a fourth step 146, the cipher data is being sent to the IP network 9 over the established sub-connection link on the UMTS network 7 side, typically to be received by the secure IP endpoint 51.

The drawings and the foregoing description are to be considered exemplary and not restrictive. The invention is not limited to the disclosed embodiments.

The present invention is defined by the claims and variations to the disclosed embodiments can be understood and effected by the person skilled in the art in practicing the claimed invention, for example by studying the drawings, the disclosure and the claims. Use of the word "comprising" in the claims does not exclude other elements or steps, and use of the article "a" or "an" does not exclude a plurality. Occurrence of features in different dependent claims does not exclude a combination of these features. Any reference signs in the claims are for increasing intelligibility and shall not be construed as limiting the scope of the claims.

## Claims

1. A transceiver (31a; 71) for transmitting cipher data in end-to-end encrypted communication with another transceiver (31b, 51; 31) over a mobile network (7), said transceiver (31a; 71) being adapted for use in said mobile network (7), said mobile network supporting real-time multimedia communication, such as video telephony, with transparency of multimedia data being communicated, said transceiver (31a, 71a) comprising:
means (35; 79) for establishing a connection link over the mobile network (7) for end-to-end encrypted communication with said another transceiver (31b, 51; 31), and
means (35;79) for sending cipher data to said another transceiver (31b, 51; 31) through a circuit switched multimedia bearer service of said mobile network (7), said bearer service being reserved in said mobile network (7) for multimedia communication.

2. The transceiver as claimed in claim 1, wherein the mobile network (7) is a cellular Universal Mobile Telecommunications Service (UMTS) network.

3. The transceiver as claimed in any one of claims 1-2, wherein the circuit switched multimedia bearer service is transparent for multimedia data, such as BS30 transparent for Multimedia as supported by UMTS.

4. The transceiver (31a) as claimed in any one of the preceding claims, wherein the transceiver (31a) is an end-user controlled device, such as a mobile telephone, further comprising:
means (43) for forming cipher data by encrypting plain data, preferably in real time, such as means for encrypting user voice data in real-time.

5. The transceiver (71) as claimed in any one of claims 1-3, wherein the transceiver (71) is a gateway being additionally adapted for use in an Internet Protocol (IP) network (9), and further comprising:
means (77) for receiving cipher data from the IP network (9) in an IP network media transport protocol format.

6. The transceiver as claimed in claim 5, wherein the cipher data is originating from a third transceiver (51), said third transceiver being an end-user controlled device, such as a personal computer, connected to said IP network (9).

7. The transceiver as claimed in any one of claims 5-6, further comprising:
means (73) for performing transport protocol conversion of the received cipher data in the IP network media transport protocol format to cipher data in a format compatible with said circuit switched multimedia bearer service of the mobile network, said conversion being transparent for said cipher data.

8. The transceiver as claimed in any one of claims 5-7, wherein the IP network media transport protocol is a protocol designed for real time data transport, such as the Realtime Transport Protocol (RTP), or the Secure Realtime Transport Protocol (SRTP).

9. A transceiver (31a; 71) for receiving cipher data in end-to-end encrypted communication with another transceiver (31b, 51; 31) over a mobile network (7), said transceiver (31a; 71) being adapted for use in said mobile network (7), said mobile network supporting real-time multimedia communication, such as video telephony, with transparency of multimedia data being communicated, said transceiver (31a; 71) comprising:
means (35; 79) for establishing a connection link over the mobile network (7) for end-to-end encrypted communication with said another transceiver (31b, 51; 31), and
means (35;79) for receiving cipher data from said another transceiver (31b, 51; 31) through a circuit switched multimedia bearer service of said mobile network (7), said bearer service being reserved in said mobile network (7) for multimedia communication.

10. The transceiver (31a) as claimed in claim 9, wherein the transceiver (31a) is an end-user controlled device, such as a mobile telephone, further comprising:
means (33) for forming plain data by decrypting, preferably in real-time, the cipher data, such as means for decrypting encrypted user voice data in real-time.

11. The transceiver (71) as claimed in claim 9 wherein the transceiver (71) is a gateway being additionally adapted for use in an Internet Protocol (IP) network (9), and further comprising:
means (77) for sending cipher data to the IP network using an IP network media transport protocol.

12. The transceiver (71) as claimed in claim 11, wherein the cipher data is addressed to a third transceiver (51), said third transceiver being an end-user controlled device, such as a personal computer, connected to said IP network (9).

13. The transceiver (71) as claimed in any one of claims 11-12, further comprising:
means (73) for performing transport protocol conversion of the received cipher data in format resulting from said circuit switched multimedia bearer service of the mobile network to the IP network media transport protocol format, said conversion being transparent for said cipher data.

14. A method for transmitting cipher data in end-to-end encrypted communication between a first transceiver (31a; 71) and a second transceiver (31b, 51; 31) over a mobile network (7), at least said first transceiver (31a; 71) being adapted for use in said mobile network (7), said mobile network supporting real-time multimedia communication, such as video telephony, with transparency of multimedia data being communicated, the method comprising the following steps being performed in the first transceiver (31a; 71):
establishing (110; 130) a connection link over the mobile network (7) for end-to-end encrypted communication with the second transceiver (31b, 51; 31),
sending (114; 136) cipher data to the second transceiver (31 b, 51; 31) through a circuit switched multimedia bearer service of said mobile network (7), said bearer service being reserved in said mobile network (7) for multimedia communication.

15. A method for receiving cipher data in end-to-end encrypted communication between end-to-end encrypted transmission from a first transceiver (31a; 71) to a second transceiver (31b, 51; 31) over a mobile network (7), at least said first transceiver (31a; 71) being adapted for use in said mobile network (7), said mobile network supporting real-time multimedia communication, such as video telephony, with transparency of multimedia data being communicated, the method comprising the following steps being performed in the first transceiver (31a; 71):
establishing (120; 140) a connection link over the mobile network (7) for end-to-end encrypted communication with the second transceiver (31b, 51; 31),
receiving (122; 142) cipher data from the second transceiver (31b, 51; 31) through a circuit switched multimedia bearer service of said mobile network (7), said bearer service being reserved in said mobile network (7) for multimedia communication.

16. A computer program product, comprising program code to execute the steps according to any one of claims 14 or 15, the program product being loadable into an internal memory of the first transceiver (31a; 71).

17. A use of a circuit switched multimedia bearer service in a mobile network (7) for end-to-end encrypted communication over said network.

18. The use as claimed in claim 17, wherein the network is a cellular Universal Mobile Telecommunications Service (UMTS) network and the service is the UMTS service BS30 transparent for Multimedia.
